# EUROPEAN PATENT APPLICATION

(11) **EP 4 422 335 A1**
(43) Date of publication of application: **28.08.2024**
(21) Application number: 22882261.5
(22) Date of filing: 28.04.2022
(51) Int. Cl.: H04W 76/15

(54) **COMMUNICATION METHOD, DEVICE, AND STORAGE MEDIUM**

(30) Priority: 22.10.2021 CN 202111235217
(71) Applicant: ZTE Corporation, Shenzhen, Guangdong 518057 (CN)
(72) Inventor: NIU, Li, Shenzhen, Guangdong 518057 (CN); DAI, Bo, Shenzhen, Guangdong 518057 (CN); SHA, Xiubin, Shenzhen, Guangdong 518057 (CN); LU, Ting, Shenzhen, Guangdong 518057 (CN)
(74) Representative: Betten & Resch
(86) International application number: PCT/CN2022/090052
(87) International publication number: WO 2023/065636

(57) **Abstract**

A communication method, a device, and a storage medium. The communication method, which is applied to a first communication node, comprises: sending protocol data unit (PDU) data by means of a second communication node (S210), wherein the PDU data comprises one of the following: a packet data convergence protocol (PDCP) PDU based on the same replication function, or a PDCP PDU based on different distribution functions.

## Description

### CROSS-REFERENCE TO RELATED APPLICATION

This application is filed on the basis of Chinese patent application No. 202111235217.7 filed October 22, 2021, and claims priority to the Chinese patent application, the entire contents of which are incorporated herein by reference.

### TECHNICAL FIELD

Embodiments of the present disclosure relate to the field of communications, and more particularly, to a communication method, a communication device, and a storage medium.

### BACKGROUND

With the widespread adoption of wireless communication technologies, numerous terminal devices can coexist within a single area. For instance, within a base station's coverage, many terminal devices are distributed in various areas of the base station. Some terminal devices are close to the base station while some others are far from the base station. A terminal device close to the base station receives signals from the base station over a channel that has better quality than that of a terminal device far from the base station. Alternatively, some terminal devices are blocked by obstacles, and therefore receive signals from the base station over channels with poor quality. To improve the reliability of data transmission, a terminal device with good channel quality can help a terminal device with poor channel quality to send a data packet. Nevertheless, establishing data transmission between these two devices necessitates addressing the immediate challenge of configuring communication between the terminal devices and the base station on the user plane.

### SUMMARY

An embodiment of the present disclosure provides a communication method, applied to a first communication node, including: sending, by a second communication node, Protocol Data Unit (PDU) data, where the PDU data includes one of: same Packet Data Convergence Protocol (PDCP) PDUs based on a replication function; or different PDCP PDUs based on a distribution function.

An embodiment of the present disclosure provides a communication method, applied to a second communication node, including: receiving PDU data sent by a first communication node, where the PDU data includes one of: same PDCP PDUs based on a replication function; or different PDCP PDUs based on a distribution function; and processing the PDU data by using a Radio Link Control (RLC) layer and a Medium Access Control (MAC) layer, and forwarding the PDU data to a third communication node.

An embodiment of the present disclosure provides a communication method, applied to a third communication node, including: receiving PDU data sent by a second communication node, where the PDU data includes one of: same PDCP PDUs based on a replication function; or different PDCP PDUs based on a distribution function.

An embodiment of the present disclosure provides a communication device, including a memory and one or more processors, where the memory is configured to store one or more programs which, when executed by the one or more processors, cause the one or more processors to implement the method in any one of the foregoing embodiments.

An embodiment of the present disclosure provides a storage medium, storing a computer program which, when executed by a processor, causes the processor to implement the method in any one of the foregoing embodiments.

### BRIEF DESCRIPTION OF DRAWINGS

FIG. 1 is a schematic diagram of communication between terminal devices and a base station according to some cases;
FIG. 2 is a flowchart of a communication method according to an embodiment of the present disclosure;
FIG. 3 is a flowchart of another communication method according to an embodiment of the present disclosure;
FIG. 4 is a flowchart of still another communication method according to an embodiment of the present disclosure;
FIG. 5 is a schematic diagram of interaction in a scenario of unicast and a single base station according to an embodiment of the present disclosure;
FIG. 6 is a schematic diagram of interaction in a scenario of unicast and a plurality of base stations according to an embodiment of the present disclosure;
FIG. 7 is a schematic diagram of interaction in a multicast scenario according to an embodiment of the present disclosure;
FIG. 8 is a schematic diagram of interaction of a channel state according to an embodiment of the present disclosure;
FIG. 9 is a schematic diagram of interaction of a Terminal Aggregator Communication (TAC) activation instruction or a TAC deactivation instruction between a base station and a User Equipment (UE) according to an embodiment of the present disclosure;
FIG. 10 is a schematic diagram of interaction of a TAC activation instruction or a TAC deactivation instruction between UEs according to an embodiment of the present disclosure;
FIG. 11 is a structural block diagram of a communication apparatus according to an embodiment of the present disclosure;
FIG. 12 is a structural block diagram of another communication apparatus according to an embodiment of the present disclosure;
FIG. 13 is a structural block diagram of still another communication apparatus according to an embodiment of the present disclosure; and
FIG. 14 is a schematic structural diagram of a communication device according to an embodiment of the present disclosure.

### DETAILED DESCRIPTION

Hereinafter, the embodiments of the present disclosure will be described in conjunction with the accompanying drawings. The following describes the present disclosure with reference to the accompanying drawings of the embodiments. The examples are merely used to illustrate the present disclosure, and are not intended to limit the scope of the present disclosure.

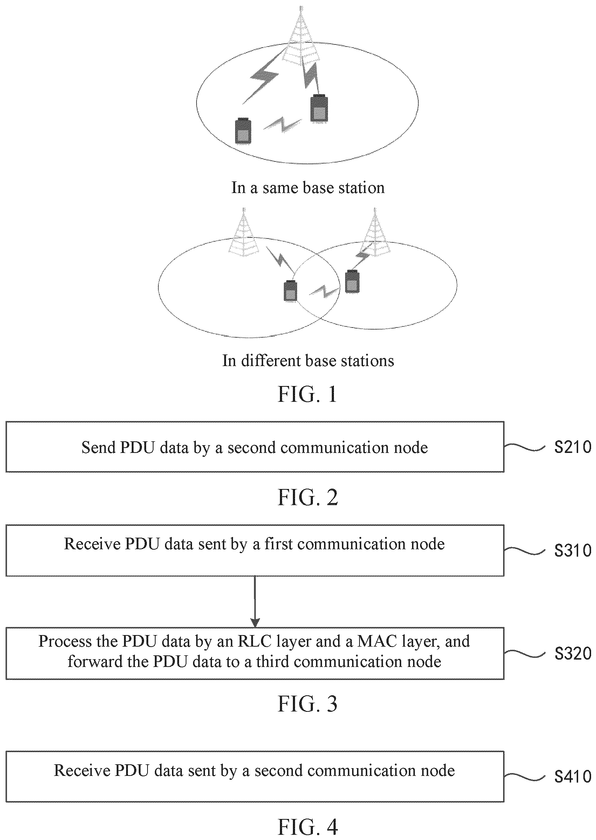

To improve reliability of data transmission, a terminal device with good channel quality may help a terminal device with poor channel quality to send a data packet. In this way, the data packet may be sent to a base station by the terminal device with good channel quality, or may be sent to the base station by the terminal device with poor channel quality. The base station receives two same data packets, and the reliability is greatly improved. Alternatively, to improve a data transmission rate, the terminal device with good channel quality may help the terminal device with poor channel quality to send a data packet. In this way, for an uplink data packet, the data packet may be sent to the base station by the terminal device with good channel quality, or may be sent to the base station by the terminal device with poor channel quality. The base station receives data packets from a plurality of terminal devices, and a quantity and a transmission rate of the received data packets greatly increase. For example, a terminal device 1 is located in the center of the base station, and has good channel quality. A terminal device 2 is located at an edge of the base station or is blocked by an obstacle, and thus has poor channel quality. The terminal device 1 and the terminal device 2 respectively establish a connection to the base station. In addition, the terminal device 1 and the terminal device 2 establish a connection with each other in a wired or a wireless way, for example, through Wi-Fi or SideLink. After generating a data packet, the terminal device 2 forwards the data packet to the terminal device 1. The terminal device 1 may assist the terminal device 2 in forwarding the data packet of the terminal device 2 to the base station. Both the terminal device 1 and the terminal device 2 send the data packet to the base station, so that the base station receives the data packet from the terminal device 1 and the terminal device 2, respectively. FIG. 1 is a schematic diagram of communication between terminal devices and a base station according to some cases. As shown in FIG. 1, two terminal devices may be in a same base station, or the two terminal devices may be in different base stations, that is, each terminal device is connected to a different base station.

For a downlink data packet, the base station may send the data packet to the terminal device with good channel quality, and then the terminal device with good channel quality forwards the data packet to the terminal device with poor channel quality. Alternatively, the base station may directly send the data packet to the terminal device with poor channel quality. The terminal device with poor channel quality receives the data packet from the base station and another terminal device. Therefore, reliability, a quantity, and a transmission rate of the received data packets are greatly increased.

In the base station, a plurality of terminal devices each establish a connection to the base station, and the plurality of terminal devices establish connections with one another. A data packet of a terminal device being forwarded by another terminal device may be referred to as Terminal Aggregator Communication (TAC). It should be noted that TAC may also be referred to as Terminal Aggregator Transmission.

Aggregator transmission of the plurality of terminal devices may be repeated transmission, that is, the plurality of terminal devices transmit a same data packet on an air interface. Alternatively, aggregator transmission of the plurality of terminal devices may be separate transmission, that is, the plurality of terminal devices transmit different data packets on an air interface.

In a Terminal Aggregator Transmission scheme, a terminal device that generates a data packet or a destination terminal device to which a data packet is finally submitted is referred to as an anchor UE; and a terminal device that assists in transmission is referred to as a non anchor UE. In a case where the anchor UE and the non anchor UE access different base stations, a base station accessed by the anchor UE is referred to as an anchor base station, and a base station accessed by the non anchor UE is referred to as a non anchor base station.

FIG. 2 is a flowchart of a communication method according to an embodiment of the present disclosure. This embodiment may be performed by a communication device. The communication device may be a first communication node. For example, the first communication node may be an anchor UE, that is, a node configured to generate a data packet. As shown in FIG. 2, the method includes a step S210.

At S210, PDU data is sent by a second communication node.

The PDU data includes one of: same PDCP PDUs based on a replication function; or different PDCP PDUs based on a distribution function.

The second communication node is configured to assist the first communication node in performing data transmission. For example, it is assumed that the first communication node is an anchor UE, and correspondingly, the second communication node is a non anchor UE. A third communication node refers to a base station. In this embodiment, in a scenario where the first communication node and the second communication node are located in a single base station, the first communication node and the second communication node access a same third communication node (that is, the base station). In a scenario where the first communication node and the second communication node are located in a plurality of base stations, that is, the first communication node and the second communication node are located in different base stations, the first communication node is an anchor UE, and the second communication node is a non anchor UE, a third communication node accessed by the first communication node is an anchor base station, and another third communication node accessed by the second communication node is a non anchor base station. It can be understood that the anchor base station refers to a base station that supports a function of generating and processing control data. The non anchor base station refers to a base station that supports assisted transmission and data forwarding.

In this embodiment, in a unicast transmission scenario, for a service, data is transmitted between a third communication node, a first communication node, and a second communication node by establishing a dedicated channel (for example, a logical channel or a transmission channel). In a multicast transmission scenario, for a service, data is transmitted between a third communication node and a plurality of first communication nodes or a plurality of second communication nodes by establishing a public channel (for example, a logical channel or a transmission channel). In an embodiment, in a scenario of unicast transmission and a single third communication node (that is, a single base station), the first communication node sends PDU data to the second communication node, and the second communication node processes and forwards the PDU data to a third communication node. Alternatively, the second communication node directly sends the PDU data to the third communication node. In an embodiment, in a scenario of unicast transmission and a plurality of base stations with the first communication node being an anchor UE and the second communication node being a non anchor UE, a third communication node accessed by the first communication node is an anchor base station, another third communication node accessed by the second communication node is a non anchor base station, and the first communication node directly sends PDU data to the anchor base station. Alternatively, the first communication node sends PDU data to the second communication node, the second communication node processes and forwards the PDU data to the non anchor base station, and the non anchor base station forwards the PDU data to the anchor base station.

In an embodiment, both the first communication node and the second communication node access a third communication node; a Service Data Adaptation Protocol (SDAP) layer, a PDCP layer, an RLC layer, and an MAC layer are established between the first communication node and the third communication node; and an RLC layer and an MAC layer are established between the second communication node and the third communication node. In an embodiment, in a scenario where the first communication node and the second communication node are located in a single base station, both the first communication node and the second communication node access a same third communication node. An SDAP layer, a PDCP layer, an RLC layer, and an MAC layer are established between the first communication node and the third communication node on a Uu interface. An RLC layer and an MAC layer are established between the second communication node and the third communication node on a Uu interface. If SideLink transmission is supported, an RLC layer and an MAC layer are established for each of the first communication node and the second communication node on a PC5 interface.

In an embodiment, the first communication node accesses a third communication node, and the second communication node accesses another third communication node. An SDAP layer, a PDCP layer, an RLC layer, and an MAC layer are established between the first communication node and the third communication node; and an RLC layer and an MAC layer are established between the second communication node and the another third communication node. The another third communication node refers to a base station, but functions supported by the another third communication node are different from those supported by the third communication node. For example, the third communication node is an anchor base station. In this case, the another third communication node is a non anchor base station. In this embodiment, in a scenario of unicast transmission and a plurality of base stations with the first communication node being an anchor UE and the second communication node being a non anchor UE, a third communication node accessed by the first communication node is an anchor base station, and another third communication node accessed by the second communication node is a non anchor base station. An SDAP layer, a PDCP layer, an RLC layer, and an MAC layer are established between the first communication node and the third communication node on a Uu interface. An RLC layer and an MAC layer are established between the second communication node and the another third communication node on a Uu interface. If SideLink transmission is supported, an RLC layer and an MAC layer are established for each of the first communication node and the second communication node on a PC5 interface. In addition, on an Xn or X2 interface, a protocol stack for the Xn or X2 interface is established at the third communication node and the another third communication node.

In an embodiment, the first communication node accesses a third communication node, and the second communication node accesses another third communication node. Sending PDU data to a third communication node by a second communication node includes: sending PDU data to the another third communication node by the second communication node, such that the another third communication node forwards the PDU data to the third communication node. In this embodiment, in a scenario of unicast transmission and a plurality of base stations with the first communication node being an anchor UE and the second communication node being a non anchor UE, a third communication node accessed by the first communication node is an anchor base station, and another third communication node accessed by the second communication node is a non anchor base station. The first communication node sends PDU data to the second communication node, the second communication node sends the PDU data to the another third communication node, and the another third communication node forwards the PDU data to the third communication node.

In an embodiment, the first communication node, the second communication node, and the third communication node are in a multicast transmission scenario, and the third communication node configures a same Radio Network Temporary Identifier (RNTI) and a same Physical Downlink Control Channel (PDCCH) resource for the first communication node and the second communication node through a Radio Resource Control (RRC) message. In this embodiment, to support a multicast scenario, the third communication node and/or the another third communication node configure(s) a same RNTI and a same PDCCH resource for the first communication node and the second communication node through an RRC message. The first communication node and the second communication node monitor a same PDCCH on the same PDCCH resource using the same RNTI. If the PDCCH schedules a data packet, both the first communication node and the second communication node can receive the data packet.

In an embodiment, before the step that PDU data is sent by a second communication node, the method further includes: sending a first channel state to a third communication node; where the first channel state includes one of: a terminal connection channel state measured by the first communication node; or a terminal connection channel state measured by the second communication node. In this embodiment, the first channel state is used to determine whether the third communication node can start terminal aggregator transmission. In addition, the first channel state refers to a channel state that is directly measured by a terminal device and reported to a corresponding base station. For example, the first channel state may be measured by the first communication node and directly reported to the corresponding third communication node. Alternatively, the first channel state may be measured by the second communication node and directly reported to the another corresponding third communication node. For example, the first communication node is an anchor UE, and the second communication node is a non anchor UE. In this case, a third communication node accessed by the first communication node is an anchor base station, and another third communication node accessed by the second communication node is a non anchor base station. In this embodiment, the first channel state may include a terminal connection channel state, or may include a Uu interface channel state. The terminal connection channel state refers to a channel state of a connection between terminal devices, which may be a terminal connection channel state measured by the first communication node, or may be a terminal connection channel state measured by the second communication node. In this embodiment, the terminal connection channel state may include a channel state of a SideLink connection, a Wi-Fi connection, or a Bluetooth connection, which may be understood as a terminal connection channel state obtained by the first communication node or the second communication node by measuring a SideLink channel, or a terminal connection channel state obtained by the first communication node or the second communication node by measuring a Wi-Fi channel, or a terminal connection channel state obtained by the first communication node or the second communication node by measuring a Bluetooth channel. A channel state of a Uu interface refers to a channel state of an interface between a terminal device and a base station, which may be a channel state of an interface between the first communication node and the third communication node and a channel state of an interface between the second communication node and the third communication node, or may be a channel state of an interface between the first communication node and the another third communication node and a channel state of an interface between the second communication node and the another third communication node.

In an embodiment, a bearer signaling format corresponding to the first channel state includes one of: a channel indicator bit and a channel state; a channel identifier and a channel state; a channel identifier, a frequency domain identifier, and a channel state; a channel indicator bit, a frequency domain identifier, and a channel state; a channel indicator bit, a channel identifier, and a channel state; or a channel indicator bit, a channel identifier, a frequency domain identifier, and a channel state. In this embodiment, the first communication node or the second communication node may report the first channel state to a corresponding third communication node or another third communication node by using corresponding bearer signaling. For example, the bearer signaling may be Medium Access Control Control Element (MAC CE) signaling. In this embodiment, a format of the MAC CE signaling may include: a channel indicator bit and a channel state; or a channel identifier and a channel state; or a channel identifier, a frequency domain identifier, and a channel state; or a channel indicator bit, a frequency domain identifier, and a channel state; or a channel indicator bit, a channel identifier, and a channel state; or a channel indicator bit, a channel identifier, a frequency domain identifier, and a channel state.

In an embodiment, the communication method applied to the first communication node further includes: receiving a second channel state sent by the second communication node, and forwarding the second channel state to a third communication node. In this embodiment, the second channel state is used to determine whether the third communication node can start terminal aggregator transmission. In addition, the second channel state may be measured by the second communication node and reported to a corresponding third communication node by the first communication node. For example, the first communication node is a local UE and an anchor UE, and the second communication node is a peer UE and a non anchor UE. In this case, a third communication node accessed by the first communication node is an anchor base station, and another third communication node accessed by the second communication node is a non anchor base station. In addition, the peer UE measures a channel state of the another third communication node accessed by the peer UE as the second channel state, and then sends the second channel state to the connected local UE, so as to send the second channel state to the third communication node by the local UE connected to the third communication node. In this embodiment, the second channel state refers to a state of a channel between the peer UE and the base station accessed by the peer UE. For example, assuming that the second communication node is the peer UE and the base station accessed by the peer UE is the another third communication node, the second channel state includes a channel state obtained by the peer UE by measuring the another third communication node. Certainly, in an actual communication process, the second channel state may also include: a channel state of the base station accessed by the local UE, which is measured by the local UE. For example, assuming that the first communication node is the local UE and the base station accessed by the local UE is the third communication node, the local UE measures a channel state of the communication node.

In an embodiment, a bearer signaling format corresponding to the second channel state includes one of: a Uu indicator bit and a channel state; a Uu identifier and a channel state; a Uu indicator bit, a frequency domain identifier, and a channel state; a Uu identifier, a frequency domain identifier, and a channel state; a Uu indicator bit, a Uu identifier, and a channel state; or a Uu indicator bit, a Uu identifier, a frequency domain identifier, and a channel state. In this embodiment, the first communication node may report the second channel state to a corresponding third communication node using corresponding bearer signaling. For example, the bearer signaling may be MAC CE signaling. In this embodiment, the MAC CE signaling may include a Uu identifier and a channel state; or a Uu indicator bit, a frequency domain identifier, and a channel state; or a Uu identifier, a frequency domain identifier, and a channel state; or a Uu indicator bit, a Uu identifier, and a channel state; or a Uu indicator bit, a Uu identifier, a frequency domain identifier, and a channel state.

In an embodiment, before the step that PDU data is sent by a second communication node, the method further includes: receiving a channel state reporting trigger condition configured by a third communication node in advance. In this embodiment, the first communication node or the second communication node reports a channel state (that is, a first channel state) of the first communication node or the second communication node, or reports a channel state (that is, a second channel state) of another UE, which consumes an air interface resource. It can be understood that, to reduce waste of air interface resources, a corresponding channel state is reported when the first communication node or the second communication node meets the channel state reporting trigger condition. Certainly, trigger conditions for the first communication node and the second communication node may be different, and the channel state reporting trigger condition may be configured by a corresponding third communication node.

In an embodiment, the channel state reporting trigger condition includes at least one of: a channel quality of a terminal device being less than a first channel quality threshold; a received signal strength of a terminal device being less than a first received signal strength threshold; a channel quality of a terminal device being less than a second channel quality threshold; a received signal strength of a terminal device being less than a second received signal strength threshold; a service packet loss rate of a terminal device being greater than a packet loss rate threshold; or a number of retransmissions of a terminal device being greater than a max retransmission threshold. In this embodiment, the first channel quality threshold may be the same as or different from the second channel quality threshold, and the first received signal strength threshold may be the same as or different from the second received signal strength threshold. In an embodiment, when the channel quality of the first communication node is less than the first channel quality threshold, that is, the channel state of the first communication node is not good, the first communication node establishes terminal aggregator transmission or a terminal connection. When the channel quality of the second communication node is less than the first channel quality threshold, that is, the channel state of the second communication node is not good, the second communication node cannot perform effective assisted transmission. In an embodiment, when the channel quality of the first communication node is greater than the channel quality of the second channel quality threshold, that is, the channel state of the first communication node is good, the first communication node does not need to establish terminal aggregator transmission or a terminal connection. When the channel quality of the second communication node is greater than the second channel quality threshold, that is, the channel state of the second communication node is good, the second communication node can perform effective assisted transmission. Similarly, illustration of the first received signal strength threshold and the second received signal strength threshold is the same as the foregoing illustration of the channel quality thresholds (including the first channel quality threshold and the second channel quality threshold).

In an embodiment, before the step that PDU data is sent by a second communication node, the method further includes: receiving a TAC activation instruction or a TAC deactivation instruction sent by a third communication node; activating TAC according to the TAC activation instruction, or deactivating TAC according to the TAC deactivation instruction. In this embodiment, the channel state of the first communication node or the second communication node changes. In a case where the channel state does not support terminal aggregation transmission, a base station may choose whether to perform terminal aggregator transmission. For example, when a channel of an anchor UE deteriorates, the base station may activate terminal aggregator transmission. However, when a channel of a non anchor UE deteriorates, the base station needs to deactivate terminal aggregator transmission.

In an embodiment, the communication method applied to the first communication node further includes: sending a TAC activation instruction or a TAC deactivation instruction to the second communication node, such that the second communication node enables TAC according to the TAC activation instruction, or terminates TAC according to the TAC deactivation instruction.

In an embodiment, the TAC activation instruction includes at least one of: a TAC activation indication; an activation service identifier; an activation terminal identifier; or an activation terminal connection.

The TAC deactivation instruction includes at least one of: a TAC deactivation indication; a deactivation service identifier; a deactivation terminal identifier; or a deactivation terminal connection.

In an embodiment, a bearer signaling format corresponding to the TAC activation instruction includes one of: a TAC activation indication; at least two TAC activation indications; a TAC activation indication and a service identifier; a TAC activation indication and a UE identifier; a TAC activation indication and a channel identifier; or a TAC activation indication and a Uu identifier.

In an embodiment, a bearer signaling format corresponding to the TAC deactivation instruction includes one of: a TAC deactivation indication; at least two TAC deactivation indications; a TAC deactivation indication and a service identifier; a TAC deactivation indication and a UE identifier; a TAC deactivation indication and a channel identifier; or a TAC deactivation indication and a Uu identifier.

FIG. 3 is a flowchart of another communication method according to an embodiment of the present disclosure. In this embodiment, the communication method may be performed by a communication device. The communication device may be a second communication node. For example, the second communication node may be a non anchor UE, that is, a node configured to assist a first communication node in performing data transmission. As shown in FIG. 3, the communication method in this embodiment includes the following steps S310 to S320.

At S310, PDU data sent by the first communication node is received.

The PDU data includes one of: same PDCP PDUs based on a replication function; or different PDCP PDUs based on a distribution function.

At S320, the PDU data is processed by an RLC layer and an MAC layer, and forwarded to a third communication node.

In an embodiment, the first communication node accesses the third communication node, and the second communication node accesses another third communication node. That the PDU data is processed by an RLC layer and an MAC layer, and forwarded to a third communication node includes that: the PDU data is processed by the RLC layer and the MAC layer, and forwarded to the another third communication node, such that the PDU data is forwarded to the third communication node by the another third communication node.

In an embodiment, before the step that PDU data sent by the first communication node is received, the method further includes:
sending a first channel state to a third communication node; where the first channel state includes one of: a terminal connection channel state measured by the first communication node; or a terminal connection channel state measured by the second communication node.

In an embodiment, before the step that PDU data sent by the first communication node is received, the method further includes:
sending a second channel state to the first communication node, such that the first communication node forwards the second channel state to a third communication node.

In an embodiment, before the step that PDU data sent by the first communication node is received, the method further includes: receiving a channel state reporting trigger condition configured by a third communication node in advance.

In an embodiment, before the step that PDU data sent by the first communication node is received, the method further includes: receiving a TAC activation instruction or a TAC deactivation instruction sent by a third communication node; activating TAC according to the TAC activation instruction, or deactivating TAC according to the TAC deactivation instruction.

In an embodiment, the communication method applied to the second communication node further includes: receiving a TAC activation instruction or a TAC deactivation instruction sent by the first communication node; activating TAC according to the TAC activation instruction, or deactivating TAC according to the TAC deactivation instruction.

It should be noted herein that for illustration of parameters in the communication method applied to the second communication node, reference may be made to description of corresponding parameters in the communication method applied to the first communication node in the foregoing embodiment. Details are not described herein again.

FIG. 4 is a flowchart of still another communication method according to an embodiment of the present disclosure. In this embodiment, the communication method may be performed by a communication device. The communication device may be a third communication node. For example, the third communication node may be a base station. As shown in FIG. 4, the communication method in this embodiment includes a step S410.

At S410, PDU data sent by a first communication node or a second communication node is received.

The PDU data includes one of: same PDCP PDUs based on a replication function; or different PDCP PDUs based on a distribution function.

In an embodiment, before the step that PDU data sent by a first communication node or a second communication node is received, the method further includes:
receiving a first channel state sent by the first communication node or the second communication node; where the first channel state includes one of: a terminal connection channel state measured by the first communication node; or a terminal connection channel state measured by the second communication node.

In an embodiment, before the step that PDU data sent by a first communication node or a second communication node is received, the method further includes:
a second channel state sent by the first communication node or the second communication node is received.

In an embodiment, before the step that PDU data sent by a first communication node or a second communication node is received, the method further includes:
sending a pre-configured channel state reporting trigger condition to the first communication node or the second communication node.

In an embodiment, before the step that PDU data sent by a first communication node or a second communication node is received, the method further includes:
sending a TAC activation instruction or a TAC deactivation instruction to the first communication node or the second communication node.

It should be noted herein that for illustration of parameters in the communication method applied to the third communication node, reference may be made to description of corresponding parameters in the communication method applied to the first communication node in the foregoing embodiment. Details are not described herein again.

In an embodiment, an architecture of a user plane is described by using an example in which the first communication node is an anchor UE, the second communication node is a non anchor UE, and the third communication node is a base station (denoted as gNB). In terminal aggregator transmission, a plurality of terminal devices each establish a connection to the base station, and the plurality of terminal devices establish connections with one another. A data packet of a terminal device is forwarded by another terminal device. The architecture of the user plane is as follows.

First, in a unicast transmission scenario:
For a unicast transmission scheme, that is, for a service, data is transmitted between the base station and a UE by establishing a dedicated channel (for example, a logical channel or a transmission channel).

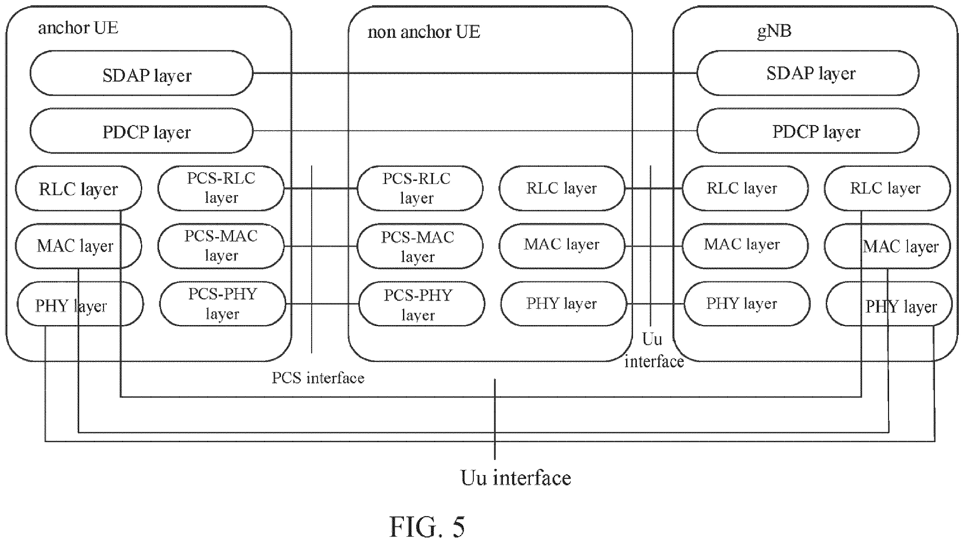

FIG. 5 is a schematic diagram of interaction in a scenario of unicast and a single base station according to an embodiment of the present disclosure. As shown in FIG. 5, in a scenario of a single base station, both an anchor UE and a non anchor UE access a same base station.

On a Uu interface, an SDAP layer, a PDCP layer, an RLC layer, and an MAC layer are established between the anchor UE and the base station.

On a Uu interface, an RLC layer and an MAC layer are established between the non anchor UE and the base station.

If SideLink transmission is supported, on a PC5 interface, an RLC layer and an MAC layer are established for each of the non anchor UE and the anchor UE.

### An uplink transmission process in the single base station scenario includes the following operations

The anchor UE sends PDCP PDUs (same PDCP PDUs based on a replication function or different PDCP PDUs based on a distribution functions) to the base station through the Uu interface.

The anchor UE sends PDCP PDUs (same PDCP PDUs based on a replication function or different PDCP PDUs based on a distribution functions) to the non anchor UE. If SideLink transmission is supported, the anchor UE sends PDCP PDUs to the non anchor UE through the PC5 interface.

The non anchor UE processes, at the RLC layer and the MAC layer, the PDCP PDUs received from the anchor UE, and forwards the PDCP PDUs to the base station.

The base station performs, at the PDCP layer, processing such as reordering on the data received from the non anchor UE and the anchor UE, and then submits the data to the SDAP layer.

A downlink transmission process in the single base station scenario includes the following operations.

The base station sends PDCP PDUs (same PDCP PDUs based on a replication function or different PDCP PDUs based on a distribution functions) to the anchor UE through the Uu interface.

The base station sends PDCP PDUs (same PDCP PDUs based on a replication function or different PDCP PDUs based on a distribution functions) to the non anchor UE through the Uu interface.

The non anchor UE forwards the data packets received from the base station to the anchor UE. If SideLink is supported, the non anchor UE forwards the received data to the anchor UE through the PC5 interface.

The anchor UE performs, at the PDCP layer, processing such as reordering on the data received from the non anchor UE and an anchor base station, and then submits the data to the SDAP layer.

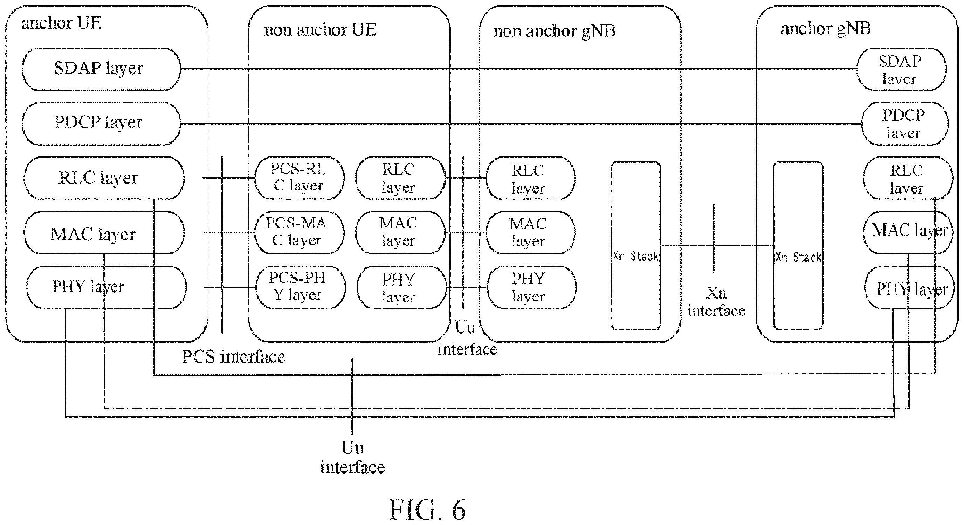

FIG. 6 is a schematic diagram of interaction in a scenario of unicast and a plurality of base stations according to an embodiment of the present disclosure. As shown in FIG. 6, in a scenario of a plurality of base stations, an anchor base station refers to a base station that supports a function of generating and processing control data, and is also a base station accessed by an anchor UE. A non anchor base station refers to a base station that supports assisted transmission and data forwarding, and is also a base station accessed by a non anchor UE.

On a Uu interface, an SDAP layer, a PDCP layer, an RLC layer, and an MAC layer are established between the anchor UE and the anchor base station.

On a Uu interface, an RLC layer and an MAC layer are established between the non anchor UE and the non anchor base station.

If SideLink transmission is supported, on a PC5 interface, an RLC layer and an MAC layer are established for each of the non anchor UE and the anchor UE.

In addition, on an Xn or X2 interface, a protocol stack for the Xn or X2 interface is established for each of the non anchor base station and the anchor base station.

An uplink transmission process in the scenario of a plurality of base stations includes the following operations.

The anchor UE sends PDCP PDUs (same PDCP PDUs based on a replication function or different PDCP PDUs based on a distribution functions) to the anchor base station through the Uu interface.

The anchor UE sends PDCP PDUs (same PDCP PDUs based on a replication function or different PDCP PDUs based on a distribution functions) to the non anchor UE. If SideLink transmission is supported, the anchor UE sends PDCP PDUs to the non anchor UE through the PC5 interface.

The non anchor UE processes, at the RLC layer and the MAC layer, the PDCP PDUs received from the anchor UE, and forwards the PDCP PDUs to the non anchor base station.

The non anchor base station forwards the received PDCP PDUs to the anchor base station through the Xn or X2 interface.

The anchor base station performs, at the PDCP layer, processing such as reordering on the data received from the non anchor base station and the anchor UE, and then submits the data to the SDAP layer.

A downlink transmission process in the scenario of a plurality of base stations includes the following operations.

The anchor base station sends PDCP PDUs (same PDCP PDUs based on a replication function or different PDCP PDUs based on a distribution functions) to the anchor UE through the Uu interface.

The anchor base station sends PDCP PDUs (same PDCP PDUs based on a replication function or different PDCP PDUs based on a distribution functions) to the non anchor base station through the Xn or X2 interface.

The non anchor base station processes, at the RLC layer and the MAC layer, the data received from the anchor base station, and forwards the PDCP PDUs to the non anchor UE.

The non anchor UE forwards the data packets received from the non anchor base station to the anchor UE. If SideLink transmission is supported, the non anchor UE forwards the received data to the anchor UE through the PC5 interface.

The anchor UE performs, at the PDCP layer, processing such as reordering on the data received from the non anchor UE and the anchor base station, and then submits the data to the SDAP layer.

Second, in a multicast transmission scenario:

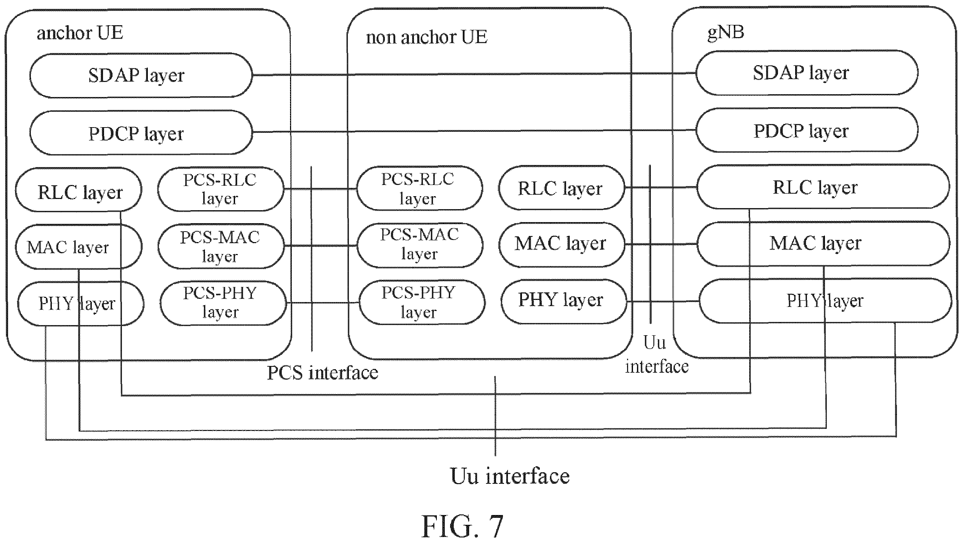

FIG. 7 is a schematic diagram of interaction in a multicast scenario according to an embodiment of the present disclosure. As shown in FIG. 7, for a multicast transmission scheme, that is, for a service, data is transmitted between a base station and a plurality of UEs by establishing a public channel (for example, a logical channel or a transmission channel).

On a Uu interface, an SDAP layer, a PDCP layer, an RLC layer, and an MAC layer are established between an anchor UE and the base station.

On a Uu interface, an RLC layer and an MAC layer are established between a non anchor UE and the base station.

If SideLink transmission is supported, on a PC5 interface, an RLC layer and an MAC layer are established for each of the non anchor UE and the anchor UE.

A downlink transmission process in the multicast transmission scenario includes the following operations.

Data sent by the base station is received by both the anchor UE and the non anchor UE.

If SideLink transmission is supported, the non anchor UE processes, at the MAC layer and the RLC layer, the data received from the base station, and forwards PDCP PDUs to the anchor UE.

The non anchor UE performs, at the PDCP layer, processing such as reordering on the data received from the base station and the anchor UE, and then submits the data to the SDAP layer.

To support multicast, the base station configures a same RNTI and a same PDCCH resource for the anchor UE and the non anchor UE using an RRC message.

The anchor UE and the non anchor UE monitor a same PDCCH on the same PDCCH resource using the same RNTI. If the PDCCH schedules a data packet, both the anchor UE and the non anchor UE can receive the data packet.

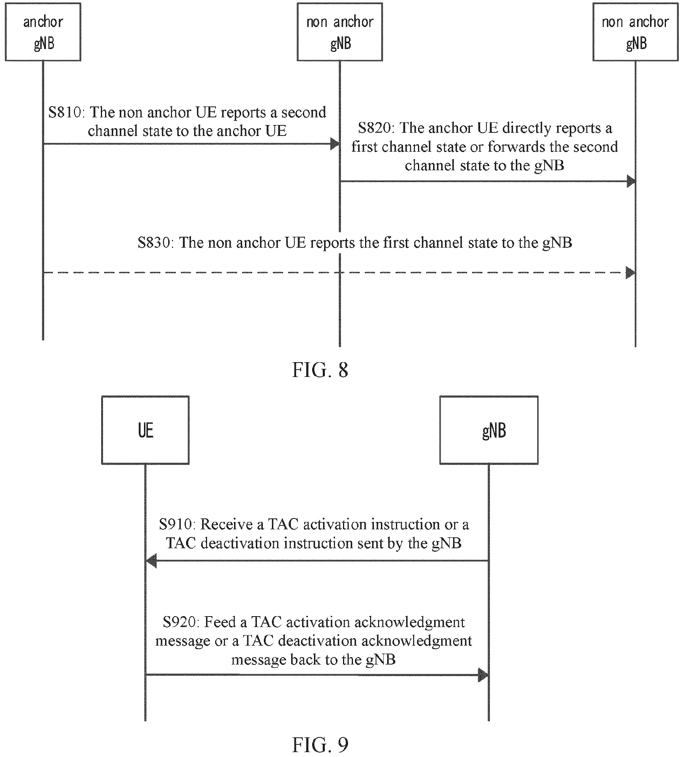

In an embodiment, a transmission process of a channel state is described by using an example in which a first communication node is a local UE, the local UE is an anchor UE, a second communication node is a peer UE, the peer UE is a non anchor UE, and a third communication node is the base station (denoted as gNB). In this embodiment, the base station may select, according to a channel state of a UE, whether to start terminal aggregator transmission. Factors that need to be considered by the base station include: a state of a channel between the base station and the non anchor UE, a state of a channel between the base station and the anchor UE, and a state of a channel between the non anchor UE and the anchor UE. Therefore, channel states of the anchor UE and the non anchor UE need to be reported to the base station for reference. FIG. 8 is a schematic diagram of interaction of a channel state according to an embodiment of the present disclosure. As shown in FIG. 8, a channel state transmission process includes the following steps S810 to S830.

At S810, a non anchor UE reports a second channel state to an anchor UE.

At S820, the anchor UE directly reports a first channel state or forwards the second channel state to a gNB.

At S830, the non anchor UE reports the first channel state to the gNB.

It should be noted that the anchor UE or the non anchor UE may directly report the first channel state to the gNB. Alternatively, the non anchor UE may report the second channel state to the anchor UE, and the anchor UE forwards the second channel state to the gNB.

Example one: An interaction process of the first channel state is described as follows.

A connection between a local UE and a peer UE may be a wireless connection such as a SideLink connection, a Wi-Fi connection, or a Bluetooth connection. The local UE or the peer UE reports a channel state of a connection between the terminal devices. The local UE and the peer UE obtain the channel state of the connection between the terminal devices. Then, the local UE and the peer UE may report the channel state of the connection between the terminal devices to a base station. The channel state of the connection between the terminal devices may be a channel state of a SideLink connection, a Wi-Fi connection, or a Bluetooth connection measured by a UE, or may be a channel state of a SideLink connection, a Wi-Fi connection, or a Bluetooth connection that is obtained by a peer UE that participates in aggregator transmission by measuring a downlink signal. A reported measurement result may be an MAC CE in the following format.

Table 1 is a schematic table of an MAC CE format according to an embodiment of the present disclosure. As shown in Table 1, the MAC CE includes a channel indicator bit and a channel state.

**Table 1 Schematic table of an MAC CE format**

| | |
|---|---|
| Channel indicator bit | Channel state |

Table 2 is a schematic table of another MAC CE format according to an embodiment of the present disclosure. As shown in Table 2, the MAC CE includes a channel identifier and a channel state.

**Table 2 Schematic table of another MAC CE format**

| | |
|---|---|
| Channel identifier | Channel state |

Table 3 is a schematic table of still another MAC CE format according to an embodiment of the present disclosure. As shown in Table 3, the MAC CE includes a channel identifier, a frequency domain identifier, and a channel state.

**Table 3 Schematic table of still another MAC CE format**

| | | |
|---|---|---|
| Channel identifier | Frequency domain identifier | Channel state |

Table 4 is a schematic table of yet another MAC CE format according to an embodiment of the present disclosure. As shown in Table 4, the MAC CE includes a channel indicator bit, a frequency domain identifier, and a channel state.

**Table 4 Schematic table of yet another MAC CE format**

| | | |
|---|---|---|
| Channel indicator bit | Frequency domain identifier | Channel state |

Table 5 is a schematic table of yet another MAC CE format according to an embodiment of the present disclosure. As shown in Table 5, the MAC CE includes a channel indicator bit, a channel identifier, and a channel state.

**Table 5 Schematic table of yet another MAC CE format**

| | | |
|---|---|---|
| Channel indicator bit | Channel identifier | Channel state |

Table 6 is a schematic table of yet another MAC CE format according to an embodiment of the present disclosure. As shown in Table 6, the MAC CE includes a channel indicator bit, a channel identifier, a frequency domain identifier, and a channel state.

**Table 6 Schematic table of yet another MAC CE format**

| | | | |
|---|---|---|---|
| Channel indicator bit | Channel identifier | Frequency domain identifier | Channel state |

The UE may also obtain a channel state of a Uu interface by measuring a downlink signal of the base station. In this case, the UE may report, to the base station, both the channel state of the connection between the terminal devices and the channel state of the Uu interface. If the reported MAC CE includes both the channel state of the connection between the terminal devices and the channel state of the Uu interface, the channel state of the Uu interface may be located in a first column of the MAC CE, and carries a terminal connection identifier (for example, 0). Alternatively, the channel state of the Uu interface may not carry a terminal connection identifier, and is the channel state of the Uu interface by default. The channel state of the connection between terminal devices may be carried in the foregoing format, and is located in a subsequent column. Table 7 is a schematic table of a layout of the channel state of the Uu interface according to an embodiment of the present disclosure. As shown in Table 7, the channel state of the Uu interface is located in the first column.

**Table 7 Schematic table of a layout of the channel state of the Uu interface**

| Channel state of the Uu interface | |
|---|---|
| 1 | Channel state of the Uu interface |

The foregoing first channel state may be a result obtained by the UE by measuring a SideLink channel, and the first channel state may be a Channel Quality Indication (CQI) value, a Reference Signal Receiving Power (RSRP) value, or the like. The CQI may be a full-bandwidth CQI, a highest subband CQI, or a subband CQI.

The foregoing first channel state may be a result obtained by the UE by measuring a Wi-Fi channel, and the first channel state may be a received channel strength, a channel occupation rate, or the like.

The foregoing first channel state may be a result obtained by the UE by measuring a Bluetooth channel, and the first channel state may be a received channel strength.

Example two: An interaction process of the second channel state is described as follows:
A local UE reports a channel state of a peer UE. The peer UE measures a channel state of a base station accessed by the peer UE. Then, the peer UE may forward, to the local UE, the channel state of the base station accessed by the peer UE, and the local UE reports the channel state to a base station accessed by the local UE. The peer UE may report, to the local UE, the channel state of the base station accessed by the peer UE over a terminal connection using an MAC CE or another data packet. The local UE may report the channel state to the base station accessed by the local UE on a Uu interface using an MAC CE or another data packet. A format of the MAC CE or another data packet is as follows.

Table 8 is a schematic table of yet another MAC CE format according to an embodiment of the present disclosure. As shown in Table 8, the MAC CE includes a Uu indicator bit and a channel state.

**Table 8 Schematic table of yet another MAC CE format**

| | |
|---|---|
| Uu indicator bit | Channel state |

Table 9 is a schematic table of yet another MAC CE format according to an embodiment of the present disclosure. As shown in Table 9, the MAC CE includes a Uu identifier and a channel state.

**Table 9 Schematic table of yet another MAC CE format**

| | |
|---|---|
| Uu identifier | Channel state |

Table 10 is a schematic table of yet another MAC CE format according to an embodiment of the present disclosure. As shown in Table 10, the MAC CE includes a Uu identifier, a frequency domain identifier, and a channel state.

**Table 10 Schematic table of yet another MAC CE format**

| | | |
|---|---|---|
| Uu identifier | Frequency domain identifier | Channel state |

Table 11 is a schematic table of yet another MAC CE format according to an embodiment of the present disclosure. As shown in Table 11, the MAC CE includes a Uu indicator bit, a frequency domain identifier, and a channel state.

**Table 11 Schematic table of yet another MAC CE format**

| | | |
|---|---|---|
| Uu indicator bit | Frequency domain identifier | Channel state |

Table 12 is a schematic table of yet another MAC CE format according to an embodiment of the present disclosure. As shown in Table 12, the MAC CE includes a Uu indicator bit, a Uu identifier, and a channel state.

**Table 12 Schematic table of yet another MAC CE format**

| | | |
|---|---|---|
| Uu indicator bit | Uu identifier | Channel state |

Table 13 is a schematic table of still another MAC CE format according to an embodiment of the present disclosure. As shown in Table 13, the MAC CE includes a Uu indicator bit, a Uu identifier, a frequency domain identifier, and a channel state.

**Table 13 Schematic table of yet another MAC CE format**

| | | | |
|---|---|---|---|
| Uu indicator bit | Uu identifier | Frequency domain identifier | Channel state |

The local UE may also obtain a Uu channel state by measuring a downlink signal of the base station accessed by the local UE. In this case, the local UE may report a Uu channel state of the peer UE and the Uu channel state of the local UE to the base station. If a reported MAC CE or another data packet includes both the Uu channel state of the peer UE and the Uu channel state of the local UE, the Uu channel state of the local UE may be located in the first column of the MAC CE (as shown in Table 7), and carry a Uu indicator bit (for example, 0). Alternatively, the Uu channel state of the local UE may not carry a Uu indicator bit, and is the Uu channel state by default. The channel state of the peer UE may be carried in the foregoing format, and is located in a subsequent column.

Herein, a channel indicator bit may have one or more bit identifiers, for example, 1 indicates SideLink, Wi-Fi, or Bluetooth, and 0 indicates Uu.

A channel identifier may be used to identify an index of a connection between UEs. For example, a channel identifier of a channel between an anchor UE and a non anchor UE 1 is 1, and a channel identifier of a channel between the anchor UE and a non anchor UE 2 is 2. A channel identifier may be used to identify a non anchor UE or a anchor UE, and may be a target identifier of the non anchor UE or the anchor UE, or may be a UE index. The channel identifier herein may be configured by a base station.

A Uu indicator bit may have one bit identifier, for example, 1 indicates a Uu of a non anchor base station, and 0 indicates a Uu of an anchor base station. Alternatively, a Uu indicator bit may have a plurality of bit identifiers, for example, 01 indicates SideLink, Wi-Fi, or Bluetooth, and 10 indicates a Uu of a non anchor base station.

A Uu identifier may be used to identify an index of communication between a base station and a UE. For example, a Uu identifier of a Uu between a base station 1 and a UE 1 is 1, and a Uu identifier of a Uu between the base station 1 and a UE 2 is 2. The Uu identifier may also be a UE index. The Uu identifier herein may be configured by a base station.

In an embodiment, if a UE always reports a channel state of the UE or a channel state of another UE, an air interface resource is consumed. To reduce unnecessary consumption of air interface resources, the UE reports a channel state when a specific channel state reporting trigger condition is met. In addition, trigger conditions for an anchor UE and a non anchor UE are different, and the trigger conditions may be configured and determined by a base station.

For example, the trigger condition includes one of the following conditions:
Condition one: a channel quality or a received signal strength of a UE is less than a specific threshold (that is, a first channel quality threshold or a first received signal strength threshold). A base station may broadcast or configure, by using RRC, a channel quality threshold for establishing terminal aggregator transmission or a terminal link. The UE performs determination. If the channel quality or the received signal strength of the UE is less than the threshold, that is, a channel state of the UE is not good, an anchor UE may establish terminal aggregator transmission or a terminal link, and a non anchor UE cannot perform effective assisted transmission. Herein, the channel quality is channel quality of a downlink signal of the base station measured by the UE, which includes a CQI and the like. The received signal strength is channel strength of the base station received and measured by the UE, which includes a RSRP, a Reference Signal Receiving Quality (RSRQ), and the like.

Condition two: a channel quality or a received signal strength of a UE is greater than a specific threshold (that is, a second channel quality threshold or a second received signal strength threshold). A base station may broadcast or configure, by using RRC, a channel quality threshold for establishing terminal aggregator transmission or a terminal link. The UE performs determination. If the channel quality or the received signal strength of the UE is greater than the threshold, that is, a channel state of the UE is good, an anchor UE can meet a rate required by a service and does not need to establish terminal aggregator transmission or a terminal link, and a non anchor UE can perform effective assisted transmission. The channel quality herein is channel quality of a downlink signal of the base station measured by the UE, which includes a CQI and the like. The received signal strength is channel strength of the base station received and measured by the UE, which includes a RSRP, a RSRQ, and the like.

Condition three: A service packet loss rate of a UE is greater than a threshold (that is, a packet loss rate threshold). A base station may broadcast or configure, by using RRC, a service packet loss rate threshold for establishing terminal aggregator transmission or a terminal link, for example, a threshold for a Hybrid Automatic Repeat ReQuest (HARQ) packet loss rate or an Automatic Repeat ReQuest (ARQ) packet loss rate of a service. The UE performs determination. If a service packet loss rate of a service established by the UE is greater than the threshold, for example, a HARQ packet loss rate or an ARQ packet loss rate of the service of the UE is greater than the threshold, that is, a service packet loss rate of the terminal device is relatively high, an anchor UE needs to establish terminal aggregation transmission or a terminal link, or a non anchor UE cannot provide effective assisted transmission.

Condition four: A number of retransmissions of a UE is greater than a threshold (that is, a max retransmission threshold). A base station may broadcast or configure, by using RRC, a max retransmission threshold for establishing terminal aggregator transmission or a terminal link, for example, a threshold for a number of HARQ retransmissions or a number of ARQ retransmissions of a service. The UE performs determination. If a number of retransmissions of a service established by the UE is greater than the threshold, for example, a number of HARQ retransmissions or a number of ARQ retransmissions of the service of the UE is greater than the threshold, that is, a number of service retransmissions of the terminal device is relatively high and a transmission delay is relatively large, an anchor UE needs to establish terminal aggregation transmission or a terminal link, or a non anchor UE cannot provide effective assisted transmission.

The foregoing triggering conditions may be used separately, or may be used in combination.

In an embodiment, a channel state of a UE changes. When the channel state of the UE does not meet terminal aggregation transmission, a base station may choose whether to perform terminal aggregator transmission. For example, when a channel of an anchor UE deteriorates, the base station may activate terminal aggregator transmission. If a channel of a non anchor UE deteriorates, the base station needs to deactivate terminal aggregator transmission.

A transmission process of a TAC activation instruction (referred to as an activation instruction) or a TAC deactivation instruction (referred to as a deactivation instruction) is described using an example in which a first communication node is an anchor UE, a second communication node is a non anchor UE, and a third communication node is a base station (denoted as a gNB).

Example one: FIG. 9 is a schematic diagram of interaction of a TAC activation instruction or a TAC deactivation instruction between a base station and a UE according to an embodiment of the present disclosure. As shown in FIG. 9, the interaction in this embodiment includes the following steps S910 to S920.

At S910, a TAC activation instruction or a TAC deactivation instruction sent by a gNB is received.

At S920, a TAC activation acknowledgment message or a TAC deactivation acknowledgment message is fed back to the gNB.

In this embodiment, the base station delivers an activation instruction to the UE to activate terminal aggregation transmission. The activation command may carry a TAC activation indication (which may also be referred to as a terminal aggregation activation indication), an activation service identifier, an activation UE identifier, and an activation terminal connection. For example, an activation connection may include SideLink connection, Wi-Fi connection, Bluetooth connection, or the like. After receiving the activation command, the UE enables terminal aggregator transmission, and starts to send or receive data on a connection between terminal devices for a corresponding service or all services between corresponding UEs.

The TAC activation instruction may be an MAC CE, and a format of the TAC activation instruction is a TAC activation indication. For example, Table 14 is a schematic table of a format of an MAC CE that carries a TAC activation instruction according to an embodiment of the present disclosure. As shown in Table 14, the MAC CE format includes a TAC activation indication.

**Table 14 Schematic table of a format of an MAC CE that carries a TAC activation instruction**

| |
|---|
| TAC activation indication |

Table 15 is a schematic table of a format of another MAC CE that carries a TAC activation instruction according to an embodiment of the present disclosure. As shown in Table 15, the MAC CE format includes a TAC activation indication and a TAC activation indication, and each TAC activation indication corresponds to a service identifier, a UE identifier, a channel identifier, or a Uu identifier. For example:

**Table 15 Schematic table of a format of another MAC CE that carries a TAC activation instruction**

| | | | |
|---|---|---|---|
| TAC activation indication | TAC activation indication | TAC activation indication | TAC activation indication |

Table 16 is a schematic table of a format of still another MAC CE that carries a TAC activation instruction according to an embodiment of the present disclosure. As shown in Table 16, the MAC CE format includes a TAC activation indication and a service identifier.

**Table 16 Schematic table of a format of still another MAC CE that carries a TAC activation instruction**

| | |
|---|---|
| TAC activation indication | Service identifier |

Table 17 is a schematic table of a format of yet another MAC CE that carries a TAC activation instruction according to an embodiment of the present disclosure. As shown in Table 17, the MAC CE format includes a TAC activation indication and a UE identifier.

**Table 17 Schematic table of a format of yet another MAC CE that carries a TAC activation instruction**

| | |
|---|---|
| TAC activation indication | UE identifier |

Table 18 is a schematic table of a format of yet another MAC CE that carries a TAC activation instruction according to an embodiment of the present disclosure. As shown in Table 18, the MAC CE format includes a TAC activation indication and a channel identifier.

**Table 18 Schematic table of a format of yet another MAC CE that carries a TAC activation instruction**

| | |
|---|---|
| TAC activation indication | Channel identifier |

Table 19 is a schematic table of a format of yet another MAC CE that carries a TAC activation instruction according to an embodiment of the present disclosure. As shown in Table 19, the MAC CE format includes a TAC activation indication and a Uu identifier.

**Table 19 Schematic table of a format of yet another MAC CE that carries a TAC activation instruction**

| | |
|---|---|
| TAC activation indication | Uu identifier |

In an embodiment, the base station delivers a TAC deactivation command to the UE to deactivate terminal aggregation transmission. The deactivation command may carry a TAC deactivation indication (referred to as a deactivation indication for short), a deactivation service identifier, a deactivation UE identifier, and a deactivation terminal connection, such as SideLink connection, Wi-Fi connection, or Bluetooth connection. After receiving the deactivation command, the UE terminates terminal aggregator transmission, and terminates sending or receiving data on a connection between terminal devices for a corresponding service or all services between corresponding UEs.

The deactivation command may be an MAC CE, and a format of the deactivation command is a TAC deactivation indication. For example, Table 20 is a schematic table of a format of an MAC CE that carries a TAC deactivation instruction according to an embodiment of the present disclosure. As shown in Table 20, the MAC CE format includes a TAC deactivation indication.

**Table 20 Schematic table of a format of an MAC CE that carries a TAC deactivation instruction**

| |
|---|
| TAC deactivation indication |

Table 21 is a schematic table of a format of another MAC CE that carries a TAC deactivation instruction according to an embodiment of the present disclosure. As shown in Table 21, the MAC CE format includes a TAC deactivation indication and a TAC deactivation indication, and each TAC deactivation indication corresponds to a service identifier, a UE identifier, a channel identifier, or a Uu identifier. For example:

**Table 21 Schematic table of a format of another MAC CE that carries a TAC deactivation instruction**

| | | | |
|---|---|---|---|
| TAC deactivation indication | TAC deactivation indication | TAC deactivation indication | TAC deactivation indication |

Table 22 is a schematic table of a format of still another MAC CE that carries a TAC deactivation instruction according to an embodiment of the present disclosure. As shown in Table 22, the MAC CE format includes a TAC deactivation indication and a service identifier.

**Table 22 Schematic table of a format of still another MAC CE that carries a TAC deactivation instruction**

| | |
|---|---|
| TAC deactivation indication | Service identifier |

Table 23 is a schematic table of a format of yet another MAC CE that carries a TAC deactivation instruction according to an embodiment of the present disclosure. As shown in Table 23, the MAC CE format includes a TAC deactivation indication and a UE identifier.

**Table 23 Schematic table of a format of yet another MAC CE that carries a TAC deactivation instruction**

| | |
|---|---|
| TAC deactivation indication | UE identifier |

Table 24 is a schematic table of a format of yet another MAC CE that carries a TAC deactivation instruction according to an embodiment of the present disclosure. As shown in Table 24, the MAC CE format includes a TAC deactivation indication and a channel identifier.

**Table 24 Schematic table of a format of yet another MAC CE that carries a TAC deactivation instruction**

| | |
|---|---|
| TAC deactivation indication | Channel identifier |

Table 25 is a schematic table of a format of yet another MAC CE that carries a TAC deactivation instruction according to an embodiment of the present disclosure. As shown in Table 25, the MAC CE format includes a TAC deactivation indication and a Uu identifier.

**Table 25 Schematic table of a format of yet another MAC CE that carries a TAC deactivation instruction**

| | |
|---|---|
| TAC deactivation indication | Uu identifier |

In this embodiment, after receiving an activation command or a deactivation command, the UE may feed back a TAC activation acknowledgment message or a TAC deactivation acknowledgment message. The acknowledgment message may be a HARQ ACK/NACK or the like.

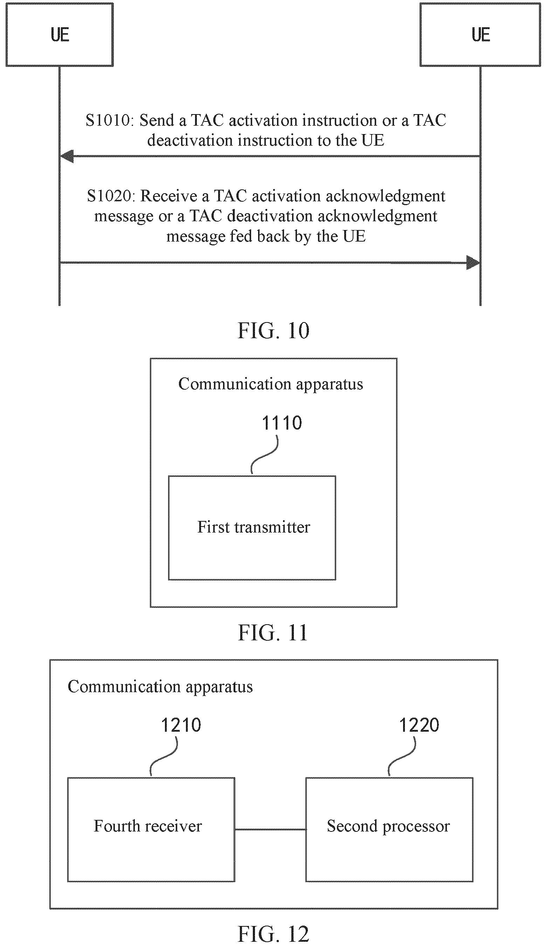

Example two: FIG. 10 is a schematic diagram of interaction of a TAC activation instruction or a TAC deactivation instruction between UEs according to an embodiment of the present disclosure. The interaction between the UEs may be understood as a process of interaction between a peer UE and a local UE. As shown in FIG. 10, the interaction in this embodiment includes the following steps S1010 to S1020.

At S1010, a TAC activation instruction or a TAC deactivation instruction is sent to a UE.

At S1020, a TAC activation acknowledgment message or a TAC deactivation acknowledgment message fed back by the UE is received.

In this embodiment, the UE delivers a TAC activation instruction to another UE to activate terminal aggregation transmission. The TAC activation instruction may carry an activation indication, an activation service identifier, and the like.

After receiving the TAC activation instruction, the another UE enables terminal aggregator transmission, and starts to send or receive data on a connection between terminal devices for a corresponding service or all services between corresponding UEs.

The TAC activation instruction may be an MAC CE, and a format of the TAC activation instruction is a TAC activation indication. For example, Table 26 is a schematic table of a format of another MAC CE that carries a TAC activation instruction according to an embodiment of the present disclosure. As shown in Table 26, the MAC CE format includes a TAC activation indication.

**Table 26 Schematic table of a format of another MAC CE that carries a TAC activation instruction**

| |
|---|
| TAC activation indication |

Table 27 is a schematic table of a format of still another MAC CE that carries a TAC activation instruction according to an embodiment of the present disclosure. As shown in Table 27, the MAC CE format includes a TAC activation indication and a TAC activation indication, and each TAC activation indication corresponds to a service identifier. For example:

**Table 27 Schematic table of a format of still another MAC CE that carries a TAC activation instruction**

| | | | |
|---|---|---|---|
| TAC activation indication | TAC activation indication | TAC activation indication | TAC activation indication |

Table 28 is a schematic table of a format of yet another MAC CE that carries a TAC activation instruction according to an embodiment of the present disclosure. As shown in Table 28, the MAC CE format includes a TAC activation indication and a service identifier.

**Table 28 Schematic table of a format of yet another MAC CE that carries a TAC activation instruction**

| | |
|---|---|
| TAC activation indication | Service identifier |

In an embodiment, a base station delivers a TAC deactivation instruction to the UE to deactivate terminal aggregation transmission. The TAC deactivation instruction may carry a deactivation indication, a deactivation service identifier, and the like. After receiving the TAC deactivation instruction, the UE terminates terminal aggregator transmission, and terminates sending or receiving data on a connection between terminal devices for a corresponding service or all services between corresponding UEs.

The TAC deactivation instruction may be an MAC CE, and a format of the TAC deactivation instruction is a TAC deactivation indication. For example, Table 29 is a schematic table of a format of another MAC CE that carries a TAC deactivation instruction according to an embodiment of the present disclosure. As shown in Table 29, the MAC CE format includes a TAC deactivation indication.

**Table 29 Schematic table of a format of another MAC CE that carries a TAC deactivation instruction**

| |
|---|
| TAC deactivation indication |

Table 30 is a schematic table of a format of still another MAC CE that carries a TAC deactivation instruction according to an embodiment of the present disclosure. As shown in Table 30, the MAC CE format includes a TAC deactivation indication and a TAC deactivation indication, and each TAC deactivation indication corresponds to a service identifier. For example:

**Table 30 Schematic table of a format of still another MAC CE that carries a TAC deactivation instruction**

| | | | |
|---|---|---|---|
| TAC deactivation indication | TAC deactivation indication | TAC deactivation indication | TAC deactivation indication |

Table 31 is a schematic table of a format of yet another MAC CE that carries a TAC deactivation instruction according to an embodiment of the present disclosure. As shown in Table 31, the MAC CE format includes a TAC deactivation indication and a service identifier.

**Table 31 Schematic table of a format of yet another MAC CE that carries a TAC deactivation instruction**

| | |
|---|---|
| TAC deactivation indication | Service identifier |

After receiving the TAC activation instruction or the TAC deactivation instruction, the UE may feed back an acknowledgment message. The acknowledgment message may be a HARQ ACK/NACK or the like.

Herein, an indication bit of an activation service identifier and a deactivation service identifier may have one or more bit identifiers. For example, 1 indicates activation, and 0 indicates deactivation.

A service identifier may be a Data Radio Bearer Identifier (DRB ID). The DRB herein may be a DRB of a Uu interface or a DRB of a SideLink.

A UE identifier is used to identify an anchor UE or a non anchor UE, and the UE identifier may be a target identifier or a UE index. The UE identifier herein may be configured by a base station.

A channel identifier may be used to identify an index of a connection between UEs. For example, a channel identifier of a channel between an anchor UE and a non anchor UE 1 is 1, and a channel identifier of a channel between an anchor UE and a non anchor UE 2 is 2. A channel identifier may be used to identify the non anchor UE or the anchor UE, and may be a target identifier of the non anchor UE or the anchor UE, or may be a UE index. The channel identifier herein may be configured by a base station.

A Uu identifier may be used to identify an index of communication between a base station and a UE. For example, a Uu identifier of a Uu between a base station 1 and a UE 1 is 1, and a Uu identifier of a Uu between the base station 1 and a UE 2 is 2. The Uu identifier may also be a UE index. The Uu identifier herein may be configured by a base station.

FIG. 11 is a structural block diagram of a communication apparatus according to an embodiment of the present disclosure. In this embodiment, the communication apparatus is applied to a first communication node. As shown in FIG. 11, communication apparatus includes a first transmitter 1110.

The first transmitter 1110 is configured to send PDU data by a second communication node. The PDU data includes one of: same PDCP PDUs based on a replication function; or different PDCP PDUs based on a distribution function.

In an embodiment, both the first communication node and the second communication node access a third communication node. An SDAP layer, a PDCP layer, an RLC layer, and an MAC layer are established between the first communication node and the third communication node; and an RLC layer and an MAC layer are established between the second communication node and the third communication node.

In an embodiment, the first communication node accesses a third communication node, and the second communication node accesses another third communication node. An SDAP layer, a PDCP layer, an RLC layer, and an MAC layer are established between the first communication node and the third communication node; and an RLC layer and an MAC layer are established between the second communication node and the another third communication node.

In an embodiment, the first communication node accesses a third communication node, and the second communication node accesses another third communication node. Sending PDU data to a third communication node by a second communication node includes:
sending PDU data to the another third communication node by the second communication node, such that the PDU data is forwarded to the third communication node by the another third communication node.

In an embodiment, the first communication node, the second communication node, and a third communication node are in a multicast transmission scenario, and the third communication node configures a RNTI and a same PDCCH resource for the first communication node and the second communication node by using an RRC message.

In an embodiment, the communication apparatus applied to the first communication node further includes a second transmitter.

Before the step that PDU data is sent by a second communication node, the second transmitter is configured to send a first channel state to a third communication node; where the first channel state includes one of: a terminal connection channel state measured by the first communication node; or a terminal connection channel state measured by the second communication node.

In an embodiment, a bearer signaling format corresponding to the first channel state includes one of: a channel indicator bit and a channel state; a channel identifier and a channel state; a channel identifier, a frequency domain identifier, and a channel state; a channel indicator bit, a frequency domain identifier, and a channel state; a channel indicator bit, a channel identifier, and a channel state; or a channel indicator bit, a channel identifier, a frequency domain identifier, and a channel state.

In an embodiment, the communication apparatus applied to the first communication node further includes:
a first receiver, configured to receive a second channel state sent by the second communication node; and
a forwarding module, configured to forward the second channel state to a third communication node.

In an embodiment, a bearer signaling format corresponding to the second channel state includes one of: a Uu indicator bit and a channel state; a Uu identifier and a channel state; a Uu indicator bit, a frequency domain identifier, and a channel state; a Uu identifier, a frequency domain identifier, and a channel state; a Uu indicator bit, a Uu identifier, and a channel state; or a Uu indicator bit, a Uu identifier, a frequency domain identifier, and a channel state.

In an embodiment, the communication apparatus applied to the first communication node further includes a second receiver.

Before the step that PDU data is sent by a second communication node, the second receiver is configured to receive a channel state reporting trigger condition configured by a third communication node in advance.

In an embodiment, the channel state reporting trigger condition includes at least one of:
a channel quality of a terminal device being less than a first channel quality threshold; a received signal strength of a terminal device being less than a first received signal strength threshold; a channel quality of a terminal device being less than a second channel quality threshold; a received signal strength of a terminal device being less than a second received signal strength threshold; a service packet loss rate of a terminal device being greater than a packet loss rate threshold; or a number of retransmissions of a terminal device being greater than a max retransmission threshold.

In an embodiment, the communication apparatus applied to the first communication node further includes a third receiver and a first processor.

Before the step that PDU data is sent by a second communication node, the third receiver is configured to receive a TAC activation instruction or a TAC deactivation instruction sent by a third communication node.

The first processor is configured to activate TAC according to the TAC activation instruction, or deactivate TAC according to the TAC deactivation instruction.

In an embodiment, the communication apparatus applied to the first communication node further includes:
a third transmitter, configured to send a TAC activation instruction or a TAC deactivation instruction to the second communication node, such that the second communication node enables TAC according to the TAC activation instruction, or terminates TAC according to the TAC deactivation instruction.

In an embodiment, the TAC activation instruction includes at least one of: a TAC activation indication; an activation service identifier; an activation terminal identifier; or an activation terminal connection.

The TAC deactivation instruction includes at least one of: a TAC deactivation indication; a deactivation service identifier; a deactivation terminal identifier; or a deactivation terminal connection.

In an embodiment, a bearer signaling format corresponding to the TAC activation instruction includes one of: a TAC activation indication; at least two TAC activation indications; a TAC activation indication and a service identifier; a TAC activation indication and a UE identifier; a TAC activation indication and a channel identifier; or a TAC activation indication and a Uu identifier.

In an embodiment, a bearer signaling format corresponding to the TAC deactivation instruction includes one of: a TAC deactivation indication; at least two TAC deactivation indications; a TAC deactivation indication and a service identifier; a TAC deactivation indication and a UE identifier; a TAC deactivation indication and a channel identifier; or a TAC deactivation indication and a Uu identifier.

The communication apparatus provided in this embodiment is configured to implement the communication method applied to the first communication node in the embodiment shown in FIG. 2. Implementation principles and technical effects of the communication apparatus provided in this embodiment are similar to those of the communication method, and details are not described herein again.

FIG. 12 is a structural block diagram of another communication apparatus according to this embodiment of the present disclosure. This embodiment is applied to a second communication node. As shown in FIG. 12, the communication apparatus in this embodiment includes a fourth receiver 1210 and a second processor 1220.

The fourth receiver 1210 is configured to receive PDU data sent by a first communication node. The PDU data includes one of: same PDCP PDUs based on a replication function; or different PDCP PDUs based on a distribution function.

The second processor 1220 is configured to process the PDU data by an RLC layer and an MAC layer, and forward the PDU data to a third communication node.

In an embodiment, the first communication node accesses the third communication node, and the second communication node accesses another third communication node. Processing the PDU data by an RLC layer and an MAC layer, and forwarding the PDU data to a third communication node includes: processing the PDU data by the RLC layer and the MAC layer, and forwarding the processed PDU data to the another third communication node, such that the PDU data is forwarded to the third communication node by the another third communication node.

In an embodiment, the communication apparatus applied to the second communication node further includes a fourth transmitter.

Before the step that PDU data sent by a first communication node is received, the fourth transmitter is configured to send a first channel state to the third communication node; where the first channel state includes one of: a terminal connection channel state measured by the first communication node; or a terminal connection channel state measured by the second communication node.

In an embodiment, the communication apparatus applied to the second communication node further includes a fifth transmitter.

Before the step that PDU data sent by a first communication node is received, the fifth transmitter is configured to send a second channel state to the first communication node, such that the first communication node forwards the second channel state to the third communication node.

In an embodiment, the communication apparatus applied to the second communication node further includes a fifth receiver.

Before the step that PDU data sent by a first communication node is received, the fifth receiver is configured to receive a channel state reporting trigger condition configured by the third communication node in advance.

In an embodiment, the communication apparatus applied to the second communication node further includes a sixth receiver and a third processor.

Before the step that PDU data sent by a first communication node is received, the sixth receiver is configured to receive a TAC activation instruction or a TAC deactivation instruction sent by the third communication node.

The third processor is configured to activate TAC according to the TAC activation instruction, or deactivate TAC according to the TAC deactivation instruction.

In an embodiment, the communication apparatus applied to the second communication node further includes:
a seventh receiver, configured to receive a TAC activation instruction or a TAC deactivation instruction sent by the first communication node; and
a fourth processor, configured to activate TAC according to the TAC activation instruction, or deactivate TAC according to the TAC deactivation instruction.

The communication apparatus provided in this embodiment is configured to implement the communication method applied to the second communication node in the embodiment shown in FIG. 3. Implementation principles and technical effects of the communication apparatus provided in this embodiment are similar to those of the communication method, and details are not described herein again.

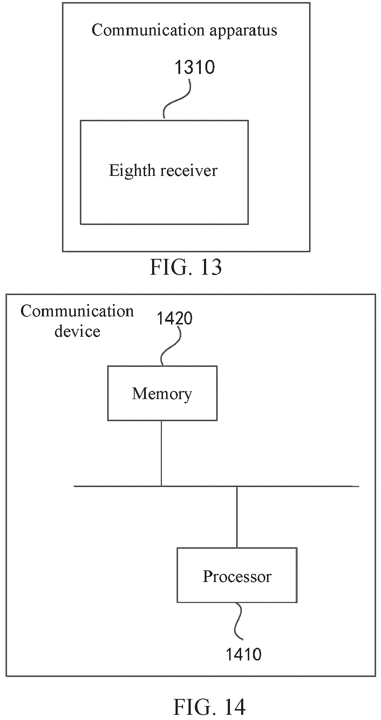

FIG. 13 is a structural block diagram of still another communication apparatus according to an embodiment of the present disclosure. The communication apparatus in this embodiment is applied to a third communication node. As shown in FIG. 13, the communication apparatus in this embodiment includes an eighth receiver 1310.

The eighth receiver 1310 is configured to receive PDU data sent by a second communication node. The PDU data includes one of: same Packet Data Convergence Protocol PDCP PDUs based on a replication function; or different PDCP PDUs based on a distribution function.

In an embodiment, the communication apparatus applied to the third communication node further includes a ninth receiver.

Before the step that PDU data sent by a second communication node is received, the ninth receiver is configured to receive a first channel state sent by a first communication node or the second communication node; where the first channel state includes one of: a terminal connection channel state measured by the first communication node; or a terminal connection channel state measured by the second communication node.

In an embodiment, the communication apparatus applied to the third communication node further includes a tenth receiver.

Before the step that PDU data sent by a second communication node is received, the tenth receiver is configured to receive a second channel state sent by a first communication node or the second communication node.

In an embodiment, the communication apparatus applied to the third communication node further includes a sixth transmitter.

Before the step that PDU data sent by a second communication node is received, the sixth transmitter is configured to send a pre-configured channel state reporting trigger condition to a first communication node or the second communication node.

In an embodiment, the communication apparatus applied to the third communication node further includes a seventh transmitter.

Before the step that PDU data sent by a second communication node is received, the seventh transmitter is configured to send a TAC activation instruction or a TAC deactivation instruction to a first communication node or the second communication node.

The communication apparatus provided in this embodiment is configured to implement the communication method applied to the third communication node in the embodiment shown in FIG. 4. Implementation principles and technical effects of the communication apparatus provided in this embodiment are similar to those of the communication method, and details are not described herein again.

FIG. 14 is a schematic structural diagram of a communication device according to an embodiment of the present disclosure. As shown in FIG. 14, the communication device provided in this embodiment of the present disclosure includes a processor 1410 and a memory 1420. One or more processors 1410 may be provided in the device. In FIG. 14, one processor 1410 is used as an example. One or more memories 1420 may be provided in the device. In FIG. 14, one memory 1420 is used as an example. The processor 1410, the memory 1420, and a communications module 1430 of the device may be connected by a bus or in another manner. In FIG. 14, connection by a bus is used as an example. In this embodiment, the device may be a first communication node. For example, the first communication node may be an anchor UE.

The memory 1420, as a computer readable storage medium, may be provided as a storage software program, a computer executable program, and a module, for example, a program instruction/module (for example, the first transmitter 1110 in the communication apparatus applied to the first communication node) corresponding to a device in any embodiment of the present disclosure. The memory 1420 may include a storage program area and a storage data area. The storage program area may store an operating system and an application program required by at least one function. The storage data area may store data created according to use of the device, and the like. In addition, the memory 1420 may include a high-speed random access memory, and may further include a non-volatile memory, such as at least one magnetic disk storage device, a flash memory device, or another non-volatile solid-state storage device. In some examples, the memory 1420 may include memories remotely located relative to the processor 1410, and the memories may be connected to the device over a network. Instances of the network may include, but not limited to, the Internet, an intranet, a local area network, a mobile communications network, and a combination thereof.

When the communication device is a second communication node, the device provided above may be configured to implement the communication method applied to the second communication node in any one of the foregoing embodiments, and has corresponding functions and effects.

When the communication device is a third communication node, the device provided above may be configured to implement the communication method applied to the third communication node in any one of the foregoing embodiments, and has corresponding functions and effects.

An embodiment of the present disclosure provides a storage medium storing a computer executable instruction which, when executed by a computer processor, causes the computer processor to implement a communication method applied to a first communication node. The method includes: sending PDU data by a second communication node, where the PDU data includes one of: same PDCP PDUs based on a replication function; or different PDCP PDUs based on a distribution function.

An embodiment of the present disclosure provides a storage medium, storing a computer executable instruction which, when executed by a computer processor, causes the computer processor to implement a communication method applied to a second communication node. The method includes: receiving PDU data sent by a first communication node, where the PDU data includes one of: same PDCP PDUs based on a replication function; or different PDCP PDUs based on a distribution function; and processing the PDU data by an RLC layer and an MAC layer, and forwarding the PDU data to a third communication node.

An embodiment of the present disclosure provides a storage medium, storing a computer executable instruction which, when executed by a computer processor, causes the computer processor to implement a communication method applied to a third communication node. The method includes: receiving PDU data sent by a second communication node, where the PDU data includes one of: same PDCP PDUs based on a replication function; or different PDCP PDUs based on a distribution function.

Those having ordinary skills in the art should understand that the term "user equipment" covers any suitable type of wireless user equipment, such as a mobile phone, a portable data processing apparatus, a portable web browser, or a vehicle-mounted mobile station.

Generally, various embodiments of the present disclosure may be implemented in hardware or a dedicated circuit, software, logic, or any combination thereof. For example, some aspects may be implemented in hardware, and others may be implemented in firmware or software that may be executed by a controller, a microprocessor, or another computing apparatus, and the present disclosure is not limited thereto.

The embodiments of the present disclosure may be implemented by executing a computer program instruction by a data processor of a mobile apparatus, for example, in a processor entity, by using hardware, or by using a combination of software and hardware. The computer program instruction may be an assembly instruction, an Instruction Set Architecture (ISA) instruction, a machine instruction, a machine-related instruction, micro code, a firmware instruction, status setting data, or source code or target code written in any combination of one or more programming languages.

A block diagram of any logical procedure in the accompanying drawings of the present disclosure may represent a program step, or may represent a logic circuit, a module, and a function that are connected to each other, or may represent a combination of a program step and a logic circuit, a module, and a function. The computer program may be stored in a memory. The memory may have any type suitable for a local technical environment and may be implemented by using any suitable data storage technology, such as, but not limited to, a Read-Only Memory (ROM), a Random Access Memory (RAM), an optical memory apparatus and a system (Digital Video Disc (DVD) or a Compact Disk (CD)). The computer readable medium may include a non-transitory storage medium. The data processor may be any type suitable for a local technical environment, such as, but not limited to a general-purpose computer, a dedicated computer, a microprocessor, a Digital Signal Processor (DSP), an Application Specific Integrated Circuit (ASIC), a Field-Programmable Gate Array (FGPA), and a processor based on a multi-core processor architecture.

The foregoing are merely embodiments of the present disclosure, and are not intended to limit the present disclosure. For those having ordinary skills in the art, various changes and variations may be made in the present disclosure. Any modification, equivalent replacement, improvement, and the like made within the principles of the present disclosure shall be included in the protection scope of the present disclosure.

## Claims

1. A communication method, applied to a first communication node, comprising:
sending Protocol Data Unit (PDU) data by a second communication node, wherein the PDU data comprises one of: same Packet Data Convergence Protocol (PDCP) PDUs based on a replication function; or different PDCP PDUs based on a distribution function.

2. The method of claim 1, wherein both the first communication node and the second communication node access a third communication node; a Service Data Adaptation Protocol (SDAP) layer, a PDCP layer, a Radio Link Control (RLC) layer and a Medium Access Control (MAC) layer are established between the first communication node and the third communication node; and an RLC layer and an MAC layer are established between the second communication node and the third communication node.

3. The method of claim 1, wherein the first communication node accesses a third communication node, and the second communication node accesses another third communication node; an SDAP layer, a PDCP layer, an RLC layer, and an MAC layer are established between the first communication node and the third communication node; and an RLC layer and an MAC layer are established between the second communication node and the another third communication node.

4. The method of claim 1, wherein the first communication node accesses a third communication node, and the second communication node accesses another third communication node; sending PDU data to a third communication node by a second communication node comprises:
sending PDU data to the another third communication node by the second communication node, such that the another third communication node forwards the PDU data to the third communication node.

5. The method of claim 1, wherein the first communication node, the second communication node, and a third communication node are in a multicast transmission scenario, and the third communication node configures a same Radio Network Temporary Identifier (RNTI) and a same Physical Downlink Control Channel (PDCCH) resource for the first communication node and the second communication node by using an RRC message.

6. The method of claim 1, wherein before sending PDU data by a second communication node, the method further comprises:
sending a first channel state to a third communication node; wherein the first channel state comprises one of: a terminal connection channel state measured by the first communication node; or a terminal connection channel state measured by the second communication node.

7. The method of claim 6, wherein a bearer signaling format corresponding to the first channel state comprises one of: a channel indicator bit and a channel state; a channel identifier and a channel state; a channel identifier, a frequency domain identifier, and a channel state; a channel indicator bit, a frequency domain identifier, and a channel state; a channel indicator bit, a channel identifier, and a channel state; or a channel indicator bit, a channel identifier, a frequency domain identifier, and a channel state.

8. The method of claim 1, further comprising:
receiving a second channel state sent by the second communication node; and
forwarding the second channel state to a third communication node.

9. The method of claim 8, wherein a bearer signaling format corresponding to the second channel state comprises one of: a Uu indicator bit and a channel state; a Uu identifier and a channel state; a Uu indicator bit, a frequency domain identifier, and a channel state; a Uu identifier, a frequency domain identifier, and a channel state; a Uu indicator bit, a Uu identifier, and a channel state; or a Uu indicator bit, a Uu identifier, a frequency domain identifier, and a channel state.

10. The method of claim 1, wherein before sending PDU data by a second communication node, the method further comprises:
receiving a channel state reporting trigger condition configured by a third communication node in advance.

11. The method of claim 10, wherein the channel state reporting trigger condition comprises at least one of:
a channel quality of a terminal device being less than a first channel quality threshold; a received signal strength of a terminal device being less than a first received signal strength threshold; a channel quality of a terminal device being less than a second channel quality threshold; a received signal strength of a terminal device being less than a second received signal strength threshold; a service packet loss rate of a terminal device being greater than a packet loss rate threshold; or a number of retransmissions of a terminal device being greater than a max retransmission threshold.

12. The method of claim 1, wherein before sending PDU data by a second communication node, the method further comprises:
receiving a Terminal Aggregator Communication (TAC) activation instruction or a TAC deactivation instruction sent by a third communication node; and
activating TAC according to the TAC activation instruction, or deactivate TAC according to the TAC deactivation instruction.

13. The method of claim 12, further comprising:
sending a TAC activation instruction or a TAC deactivation instruction to the second communication node, such that the second communication node enables TAC according to the TAC activation instruction, or terminates TAC according to the TAC deactivation instruction.

14. The method of claim 12 or 13, wherein the TAC activation instruction comprises at least one of: a TAC activation indication; an activation service identifier; an activation terminal identifier; or an activation terminal connection; and
the TAC deactivation instruction comprises at least one of: a TAC deactivation indication; a deactivation service identifier; a deactivation terminal identifier; or a deactivation terminal connection.

15. The method of claim 12 or 13, wherein a bearer signaling format corresponding to the TAC activation instruction comprises one of: a TAC activation indication; at least two TAC activation indications; a TAC activation indication and a service identifier; a TAC activation indication and a UE identifier; a TAC activation indication and a channel identifier; or a TAC activation indication and a Uu identifier.

16. The method of claim 12 or 13, wherein a bearer signaling format corresponding to the TAC deactivation instruction comprises one of: a TAC deactivation indication; at least two TAC deactivation indications; a TAC deactivation indication and a service identifier; a TAC deactivation indication and a UE identifier; a TAC deactivation indication and a channel identifier; or a TAC deactivation indication and a Uu identifier.

17. A communication method, applied to a second communication node, comprising:
receiving Protocol Data Unit (PDU) data sent by a first communication node, wherein the PDU data comprises one of: same Packet Data Convergence Protocol (PDCP) PDUs based on a replication function; or different PDCP PDUs based on a distribution function; and
processing the PDU data by a Radio Link Control (RLC) layer and a Medium Access Control (MAC) layer, and forwarding the PDU data to a third communication node.

18. The method of claim 17, wherein the first communication node accesses the third communication node, and the second communication node accesses another third communication node; processing the PDU data by an RLC layer and an MAC layer, and forwarding the PDU data to a third communication node comprises: processing the PDU data by the RLC layer and the MAC layer, and forwarding the PDU data to the another third communication node, such that the PDU data is forwarded to the third communication node by the another third communication node.

19. The method of claim 17, wherein before receiving PDU data sent by a first communication node, the method further comprises:
sending a first channel state to the third communication node; wherein the first channel state comprises one of: a terminal connection channel state measured by the first communication node; or a terminal connection channel state measured by the second communication node.

20. The method of claim 17, wherein before receiving PDU data sent by a first communication node, the method further comprises:
sending a second channel state to the first communication node, such that the first communication node forwards the second channel state to the third communication node.

21. The method of claim 17, wherein before receiving PDU data sent by a first communication node, the method further comprises:
receiving a channel state reporting trigger condition configured by the third communication node in advance.

22. The method of claim 17, wherein before receiving PDU data sent by a first communication node, the method further comprises:
receiving a Terminal Aggregator Communication (TAC) activation instruction or a TAC deactivation instruction sent by the third communication node; and
activating TAC according to the TAC activation instruction, or deactivate TAC according to the TAC deactivation instruction.

23. The method of claim 17, further comprising:
receiving a TAC activation instruction or a TAC deactivation instruction sent by the first communication node; and
activating TAC according to the TAC activation instruction, or deactivate TAC according to the TAC deactivation instruction.

24. A communication method, applied to a third communication node, comprising:
receiving Protocol Data Unit (PDU) data sent by a second communication node, wherein the PDU data comprises one of: same Packet Data Convergence Protocol (PDCP) PDUs based on a replication function; or different PDCP PDUs based on a distribution function.

25. The method of claim 24, wherein before receiving PDU data sent by a second communication node, the method further comprises:
receiving a first channel state sent by a first communication node or the second communication node; wherein the first channel state comprises one of: a terminal connection channel state measured by the first communication node; or a terminal connection channel state measured by the second communication node.

26. The method of claim 24, wherein before receiving PDU data sent by a second communication node, the method further comprises:
receiving a second channel state sent by a first communication node or the second communication node.

27. The method of claim 24, wherein before receiving PDU data sent by a second communication node, the method further comprises:
sending a pre-configured channel state reporting trigger condition to a first communication node or the second communication node.

28. The method of claim 24, wherein before receiving PDU data sent by a second communication node, the method further comprises:
sending a Terminal Aggregator Communication (TAC) activation instruction or a TAC deactivation instruction to a first communication node or the second communication node.

29. A communication device, comprising a memory and one or more processors, wherein:
the memory is configured to store one or more programs;
the one or more programs, when executed by the one or more processors, cause the one or more processors to perform the method of any of claims 1 to 16, the method of any of claims 17 to 23, or the method of any of claims 24 to 28.

30. A storage medium, storing a computer program which, when executed by a processor, causes the processor to perform the method of any of claims 1 to 16, the method of any of claims 17 to 23, or the method of any of claims 24 to 28.
